# EUROPEAN PATENT APPLICATION

(11) **EP 4 270 432 A1**
(43) Date of publication of application: **01.11.2023**
(21) Application number: 23155660.6
(22) Date of filing: 08.02.2023
(51) Int. Cl.: H01H 3/02, H01H 23/14, B60K 37/06

(54) **TWO-SWITCH FUNCTION ACTIVATION ASSEMBLY AND METHOD OF GUARDING AGAINST UNINTENTIONAL ACTIVATION**

(30) Priority: 09.03.2022 US 202263318052 P
(71) Applicant: Aptiv Technologies Limited, St. Michael (BB)
(72) Inventor: LIPKA, Janusz, Dublin, 2 (IE); MELFRIED, Sebastian, Dublin, 2 (IE)
(74) Representative: Lewis Silkin LLP

(57) **Abstract**

A switch assembly (22) for a vehicle includes a first switch (40) and a second switch (46) that is adjacent the first switch. The first and second switches are actuatable independently of actuation of the other one of the switches. A switch actuator (24) presents a surface in an interior of the vehicle for a user to press/contact to selectively actuate the first and second switches. A processor (50) is configured to initiate a communication function, e.g. an emergency call, based on determining when the first (40) and second (46) switches have been actuated in a predefined manner, i.e. that the first and second switches have been actuated simultaneously or individually actuated within a predefined time.

## Description

### BACKGROUND

Automobiles include an increasing amount of electronics and associated functionality. Many vehicles include components that provide wireless communication functions that facilitate communications with devices remote from the vehicle. For example, some vehicles include an emergency call button to request emergency services, such as in the event of a traffic accident.

Designers of emergency call buttons have attempted to include features that reduce the likelihood that an emergency call will be unintentionally placed. One approach has been to situate the emergency call button behind a cover that has to be manipulated out of the way to gain access to the call button. One drawback to this approach is that it requires additional parts including a latch and a spring. Other approaches require an individual to manipulate a button or buttons in a particular pattern. Such patterns might not be easily remembered, especially by an individual who is in a situation requiring emergency assistance.

### SUMMARY

The invention seeks to address identified drawbacks or at least provide automakers and/or the public with an alternative.

A broad aspect of the invention is outlined according to claim 1. For example, a switch assembly for a vehicle may comprise: a first switch; a second switch that is adjacent the first switch and actuatable independent of actuation of the first switch; a switch actuator that presents a surface in an interior of the vehicle for a user to contact to selectively actuate the first and second switches; and a processor configured to initiate a communication function based on determining when the first and second switches are actuated in a predefined manner. The predefined manner may comprise the first and second switches being actuated simultaneously or the first and second switches being individually actuated within a predefined time. Alternatively or in addition, the predefined manner may comprise a predefined sequence of actuation.

In this way, in the context of an emergency call button/switch, a communication function is less likely to be inadvertently activated because at least two switches must be actuated, either simultaneously or within a relatively short predetermined time, before a call is made. This avoids unnecessary costs incurred or having to rescind an emergency call or other request.

In an illustrative example, a switch assembly for a vehicle includes a first switch and a second switch that is adjacent the first switch. The first and second switches are actuatable independent of actuation of the other one of the switches. A switch actuator presents a surface in an interior of the vehicle for a user to contact to selectively actuate the first and second switches. A processor is configured to initiate a communication function based on determining that the first and second switches were actuated in a predefined manner. The predefined manner may comprise the first and second switches being actuated simultaneously or the first and second switches being individually actuated within a predefined time.

In addition to one or more of the features described above, or as an alternative, the switch actuator may comprise a panel that is configured to be pivoted about a pivot portion of the panel (e.g. at a centre thereof) toward a first side to actuate the first switch and toward a second side to actuate the second switch; and the switch actuator allows for the first and second switches to be actuated individually within the predefined time. The panel is actuated in a rocking motion and, in this way, a mechanical activation element is provided to implement the function of the invention at least for individual activation within a predefined time. According to this and other examples herein there is no need to add additional parts like a flap with latch and spring as in prior art solutions.

In addition to one or more of the features described above, or as an alternative, the processor is configured to initiate the communication function only based on determining that the first and second switches were actuated individually within the predefined time.

In addition to one or more of the features described above, or as an alternative, the first and second switches are situated on opposite sides of a support; and a mid- or central- portion of the panel is connected to the support in a manner that allows the panel to be pivoted.

In addition to one or more of the features described above, or as an alternative, one of the support and the mid or central portion of the panel comprises a rod; and the other of the central portion of the panel and the support comprises a clip that engages the rod; and the clip is rotatable about the rod to pivot the panel toward the first side and toward the second side. In this way, a proximate connection between an end of the rod and clip enables pivoting movement.

In addition to one or more of the features described above, or as an alternative, the switch assembly includes an indicator configured to provide an indication that one of the switches has been actuated and the other of the switches has to be actuated within the predefined time to initiate the communication function.

In addition to one or more of the features described above, or as an alternative, the indicator comprises a visible symbol and the indication comprises a change in an appearance of the visible symbol.

In addition to one or more of the features described above, or as an alternative, the visible symbol is located on the switch actuator, i.e. in a position visible to the user.

In addition to one or more of the features described above, or as an alternative, the appearance of the visible symbol corresponds to the communication function.

In addition to one or more of the features described above, or as an alternative, the switch actuator comprises a first moveable portion for actuating the first switch and a second moveable portion for actuating the second switch; the first moveable portion is moveable independent of movement of the second moveable portion; and the processor initiates the communication function based on determining that the first and second switches were actuated simultaneously or the first and second switches were individually actuated within the predefined time. In this way, it is possible to determine an intentional activation of the switch assembly before a communication function is initiated.

In addition to one or more of the features described above, or as an alternative, a predefined manner of implementation comprises the first switch being actuated before the second switch or the second switch being actuated before the first switch.

### BRIEF DESCRIPTION OF THE DRAWINGS

The drawings that accompany the detailed description can be briefly described as follows:
Figure 1 diagrammatically illustrates a vehicle including a switch assembly designed according to an embodiment of this invention;
Figure 2 frontally illustrates selected features of an example embodiment of a switch assembly;
Figure 3 shows a partially exploded view of the embodiment shown in Figure 2;
Figure 4 schematically illustrates selected features of an embodiment like that shown in Figures 2 and 3;
Figure 5 shows a flow chart diagram summarizing an example embodiment of a method of controlling a function based on switch actuation; and
Figure 6 schematically illustrates selected features of another example embodiment of a switch assembly.

### DETAILED DESCRIPTION

The following description presents exemplary embodiments and, together with the drawings, serves to explain principles of the invention. However, the scope of the invention is not intended to be limited to the precise details of the embodiments or exact adherence with all features and/or method steps of implementation, since variations will be apparent to a skilled person and are deemed also to be covered by the description. Terms for components used herein should be given a broad interpretation that also encompasses equivalent functions and features. In some cases, several alternative terms (synonyms) for structural features have been provided but such terms are not intended to be exhaustive. Descriptive terms should also be given the broadest possible interpretation; e.g. the term "comprising" as used in this specification means "consisting at least in part of" such that interpreting each statement in this specification that includes the term "comprising", features other than that, in addition to, or those prefaced by the term may also be present. Related terms such as "comprise" and "comprises" are to be interpreted in the same manner. Directional terms such as "vertical", "horizontal", "up", "down", "sideways", "upper" and "lower" are used for convenience of explanation usually with reference to the orientation shown in illustrations and are not intended to be ultimately limiting if an equivalent function can be achieved with an alternative dimension and/or direction. Therefore, all directional terms are relative to each other.

The description herein refers to embodiments with particular combinations of steps or features, however, it is envisaged that further combinations and cross-combinations of compatible steps or features between embodiments will be possible. Indeed, isolated features may function independently as an invention from other features and not necessarily require implementation as a complete combination.

It will be understood that the illustrated embodiments show applications only for the purposes of explanation. In practice, the invention may be applied to many different configurations, where the embodiment is straightforward for those skilled in the art to implement.

Disclosed example embodiments and others like them facilitate a communication function, such as placing a call for emergency services from a vehicle. However, other uses are possible. A switch assembly and control method make it simple for an individual to activate the communication function and guards against unintentional activation.

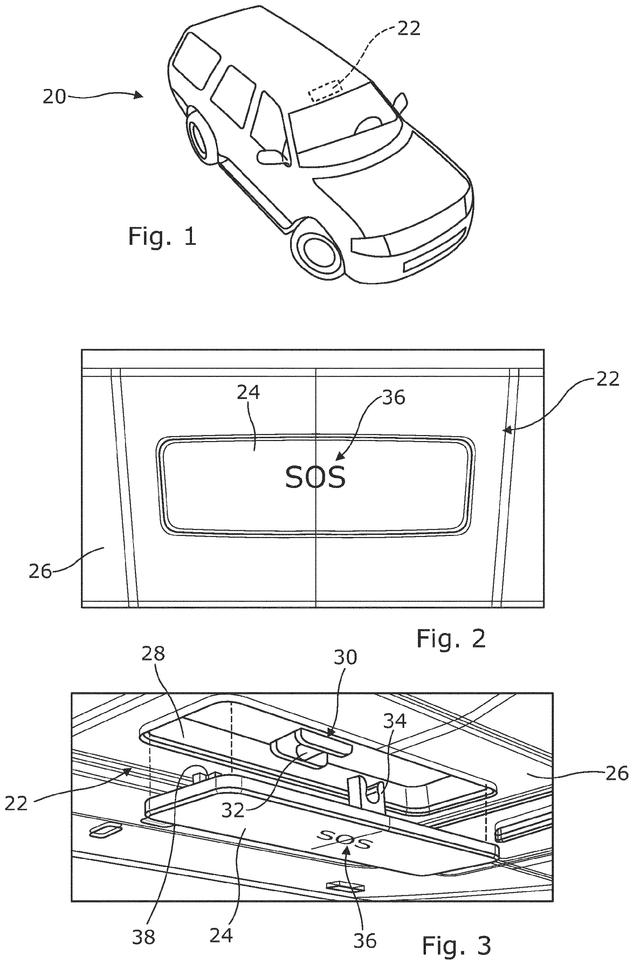

Figure 1 shows a vehicle 20 including a switch assembly 22 that is configured to activate a communication function. The switch assembly 22 is at least partially situated inside the vehicle interior, e.g. in a ceiling portion, where an individual in the vehicle can access the switch assembly 22 when the communication function is desired. An emergency services request or call is an example communication function that is discussed in the following description. Switch assemblies designed according to an embodiment of this invention may be useful for other communication functions.

As can be appreciated from Figures 2 and 3, the switch assembly 22 of this example embodiment includes a switch actuator panel 24 that is situated to present a surface that can be contacted or touched by an individual in the interior of the vehicle 20. In this embodiment, an interior surface 26, which may be part of a headliner, for example, includes a recess 28. The panel 24 is received into the recess 28 and maintained in place by a support 30. In this example, the support 30 includes at least one rod 32 (e.g. male connector) within the recess 28 and a central portion of the panel 24 includes at least one clip 34 (e.g. female receiving portion) that engages the rod 32. In some embodiments, the panel 24 may include at least one rod and the support 30 includes a clip that cooperates with the rod to hold the panel 24 in place.

In this example embodiment, the panel 24 includes an indicator 36 on an outer side facing toward the vehicle interior. The indicator 36 includes a visible symbol that provides a visual indication of the function associated with the switch assembly 22. The visible symbol in some embodiments includes an icon, letters, or a combination of them. An opposite side of the panel 24 includes at least one switch actuating boss 38.

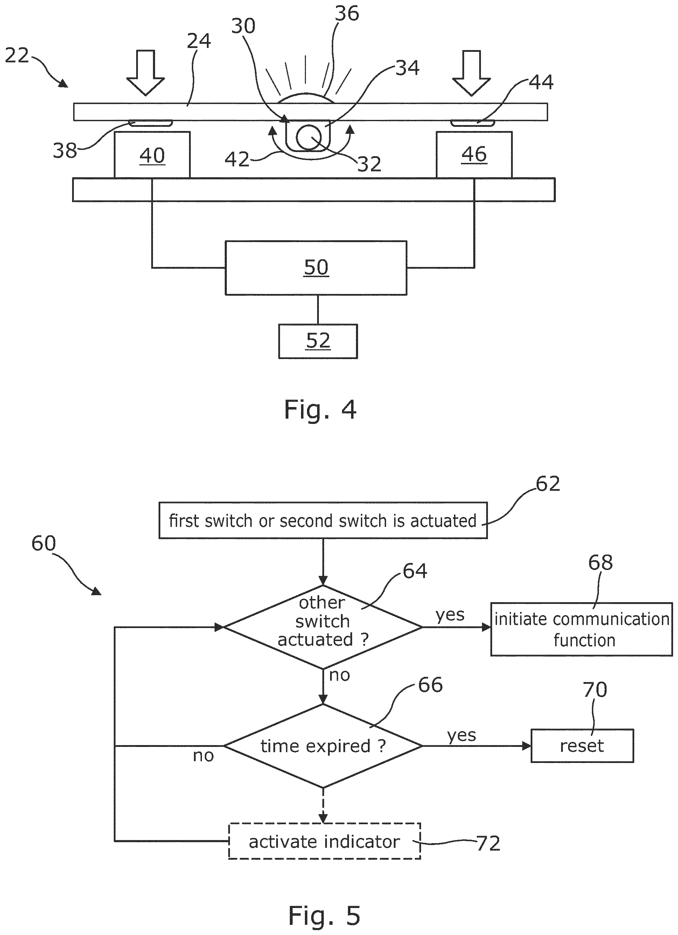

As can be appreciated from Figure 4, the panel 24 is supported for pivotal movement relative to the interior surface 26 to allow a first side of the panel 24 to be pressed so the first switch actuating boss 38 contacts and actuates a first switch 40. As the first side of the panel 24 is pressed toward the first switch 40, the clip 34 rotates about the rod 32 and the panel 24 pivots in a see-saw action as schematically represented by the arrow 42. A second side of the panel 24 includes a second switch actuating boss 44 that is positioned to actuate a second switch 46 when the second side of the panel 24 is pressed toward the second switch 46. It will be apparent that the arrangement allows a see-saw action where either of the first or second switch could be activated before the other. The first switch 40 and the second switch 46 can be any known switch that is actuated by contact or pressure.

A processor 50 determines if/when the switches 40 and 46 have been actuated and instigates the corresponding communication function, such as controlling a transceiver 52 to place a call for emergency services.

Figure 5 illustrates a flowchart diagram 60 that summarizes an example method of controlling operation of the communication function. At box 62, the processor 50 determines when one of the first switch 40 or the second switch 46 has been actuated, which would occur when a user presses on the corresponding side of the panel 24 to pivot that side into engagement with the corresponding switch 40 or 46. At decision box 64, the processor 50 determines whether the other of the first and second switches 40, 46 has been actuated. In this example embodiment, an emergency services call will only be initiated by the processor 50 if the first switch 40 and the second switch 46 have both been pressed within a preselected time. An example predetermined time is two seconds, but aby suitable time period may be implemented, such as 0.5 to five seconds.

If the other switch has not (yet) been actuated, the processor determines whether the predefined time has expired at decision box 66. If there is still time remaining, the processor 50 continues to monitor for actuation of the other switch.

If both switches 40 and 46 have been actuated within the predefined time, then the processor 50 positively initiates the communication function at box 68. However, if only one of the switches 40, 46 has been actuated and the predefined time elapses before the other switch is actuated, the processor 50 resets at box 70 and does not initiate an emergency services call.

In an embodiment like that shown in Figures 2-4, the panel 24 cannot be manipulated in a manner that would simultaneously actuate both of the switches 40 and 46. In this case, the only way a user can initiate an emergency services call in such an embodiment is by pressing on one side of the panel 24 and then the other within the predefined time (the instructions for which may be contained in a manual or stated in text adjacent or on the panel 24). In this embodiment, the processor 50 is programmed or otherwise configured to recognize an initial switch actuation of either the first switch 40 or the second switch 46 followed by actuation of the other switch within the predefined time as an indication that an emergency services call is intended.

In some embodiments, the indicator 36 includes a visible symbol having a light or a color that can be controlled by the processor 50. Figure 5 includes a functional block for activating the indicator at dotted line box 72 when only one of the switches 40, 46 has been actuated and the predefined time has not yet expired. By changing the color or flashing the light of the indicator 36, the switch assembly 22 provides a prompt to the individual who actuated one of the switches to actuate the other switch to place an emergency call. While the indicator 36 is activated at box 72 in this example embodiment, other embodiments may include an indicator that is in another location within the vehicle interior.

In some embodiments, the indicator 36 includes an illuminated visible symbol on or near each depressible end of the panel 24. Each lighted symbol may be a first color, such as green, when the communication function is in a sleep or inactive state. When a user presses on one side of the panel, the processor 50 changes the illumination of the visible symbol on the other side of the panel 24. In some embodiments, changing the illumination includes changing the color to a second color, causing the light to flash, or a combination of these. In one example embodiment, the visible symbol on the side of the panel 24 that has not yet been pressed, changes to a second color, such as red, and flashes. The processor 50 causes the second color light to continue flashing until that side of the panel 24 is pressed to activate the corresponding switch or the time limit expires. If the individual user presses that side soon enough, the processor 50 causes the visible symbol to remain the second color and stop blinking to indicate that the communication function has been instigated. If that side of the panel 24 is not pressed soon enough and the time limit expires, the processor 50 causes both visible symbols to change back to the first color indicating that the communication function was not performed.

Some embodiments may include an audible indicator that provides an audible prompt to press the other side of the panel 24 to actuate the other switch. An individual who inadvertently actuated one of the switches 40, 46 and does not desire to place an emergency services call can interpret the prompt as a warning not to press the other side of the panel to avoid placing a call. In all embodiments, instructions may require a specified side of the panel 24/button to be pressed first, so that a positive intent to initiate a communication request is registered.

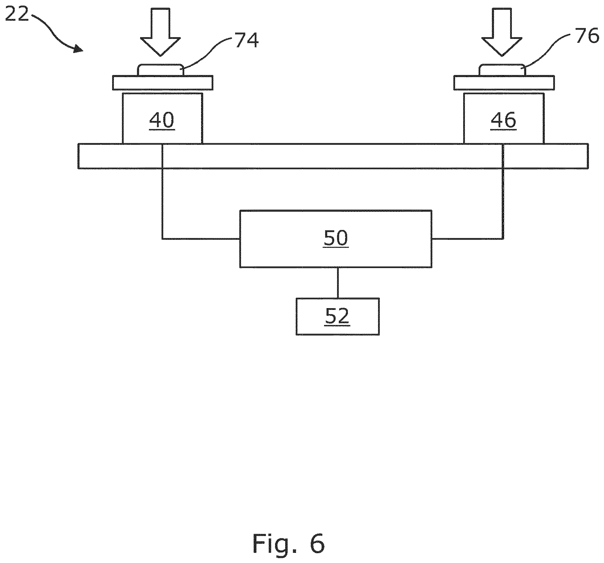

Figure 6 shows another example embodiment that does not include a pivotable panel to actuate the switches 40 and 46. In this embodiment, the switch actuator includes a first moveable portion 74 that can be manipulated or pressed to actuate the first switch 40 and an independent second moveable portion 76 that can be manipulated or pressed to actuate the second switch 46. The first moveable portion 74 and the second moveable portion 76 may be buttons, for example.

The processor 50 in the embodiment of Figure 6 can operate according to the flow chart 60 of Figure 5. The processor 50 may recognize an order in which the switches 40, 46 are actuated (or either order if a precise order is not essential) within a predetermined time period as a command to place an emergency call. Or particularly in this embodiment, it is possible for both switches to be actuated practically simultaneously if an individual presses both moveable portions 74 and 76 at once. In that case, the processor recognizes that both switches were actuated within the predefined time (e.g. a very short time period, almost zero) and the condition at decision box 64 is satisfied at the same time that the switch actuation is detected at box 62.

Either of the disclosed example embodiments, and others of functional equivalence, allow for a user to easily operate the switch assembly 20 to place a call for emergency services. The way in which the processor 50 only places such a call when based on both of the switches 40 and 46 being actuated within a predefined time (and sequence if desired) of each other guards against unintentional activation of the communication function.

A possible variation includes the implementation of at least one touch sensitive and/or haptic zone (e.g. to activate or function as the first and/or second switches), that is not necessarily mechanically depressible, e.g. in place of the illustrated buttons 74, 76 of Figure 6. In this way, the first and second switches could be regarded as integrated with the switch actuator.

A further variation may include a third switch or a third or further activation of either the first or second switch, in order to initiate the communication function. For example, the switches may be activated in sequence 1-2-1 within a predetermined time period according to instructions configured for the processor.

The features of the disclosed embodiments are not necessarily limited to that particular embodiment. Combinations or sub-combinations of features of the embodiments are possible to realize additional embodiments.

By way of general summary, the invention proposes a switch assembly for a vehicle includes a first switch and a second switch that is adjacent the first switch. The first and second switches are actuatable independently of actuation of the other one of the switches. A switch actuator presents a surface in an interior of the vehicle for a user to press/contact to selectively actuate the first and second switches. A processor is configured to initiate a communication function, e.g. an emergency call, based on determining when the first and second switches have been actuated in a predefined manner, i.e. that the first and second switches have been actuated simultaneously or individually actuated within a predefined time.

The preceding description is exemplary rather than limiting in nature. Variations and modifications to the disclosed examples may become apparent to those skilled in the art that do not necessarily depart from the essence of this invention as outlined by the appended claims.

## Claims

1. A switch assembly for a vehicle, comprising:
a first switch;
a second switch that is adjacent the first switch and actuatable independent of actuation of the first switch;
a switch actuator that presents a surface in an interior of the vehicle for a user to contact to selectively actuate the first and second switches; and
a processor configured to initiate a communication function based on determining that the first and second switches were actuated in a predefined manner that comprises the first and second switches being actuated simultaneously or the first and second switches being individually actuated within a predefined time.

2. The switch assembly of claim 1, wherein
the switch actuator comprises a panel configured to pivot about a central portion of the panel toward a first side to actuate the first switch and toward a second side to actuate the second switch; and
the switch actuator allows for the first and second switches to be actuated individually within the predefined time.

3. The switch assembly of claim 2, wherein the processor is configured to initiate the communication function only based on determining that the first and second switches were actuated individually within the predefined time.

4. The switch assembly of claim 2, wherein
the first and second switches are situated on opposite sides of a support; and
the central portion of the panel is connected to the support in a manner that allows the panel to be pivoted.

5. The switch assembly of claim 4, wherein
one of the support and the central portion of the panel comprises a male part;
the other of the central portion of the panel and the support comprises a female part that engages the male part; and
the female part is rotatable about the male part to pivot the panel toward the first side and toward the second side.

6. The switch assembly of claim 1, comprising an indicator configured to provide an indication that one of the switches has been actuated and the other of the switches has to be actuated within the predefined time and/or predefined sequence to initiate the communication function.

7. The switch assembly of claim 6, wherein the indicator comprises a visible symbol and the indication comprises a change in an appearance of the visible symbol.

8. The switch assembly of claim 7, wherein the visible symbol is on the switch actuator.

9. The switch assembly of claim 7, wherein the appearance of the visible symbol corresponds to the communication function.

10. The switch assembly of claim 1, wherein
the switch actuator comprises a first moveable portion for actuating the first switch and a second moveable portion for actuating the second switch;
the first moveable portion is moveable independent of movement of the second moveable portion; and
the processor initiates the communication function based on determining that the first and second switches were actuated simultaneously or the first and second switches were individually actuated within the predefined time.

11. The switch assembly of claim 10, wherein the predefined manner comprises the first switch being actuated before the second switch or the second switch being actuated before the first switch.

12. The switch assembly of claim 1, wherein the first switch and second switch are integrated with the switch actuator in a touch sensitive and/or haptic zone.
